# EUROPEAN PATENT APPLICATION

(11) **EP 4 636 711 A1**
(43) Date of publication of application: **22.10.2025**
(21) Application number: 24171064.9
(22) Date of filing: 18.04.2024
(51) Int. Cl.: G06V 20/52, G06V 40/16

(54) **METHODS AND SYSTEMS FOR TRACKING MOBILE OBJECTS**

(71) Applicant: TOYOTA JIDOSHA KABUSHIKI KAISHA, Toyota-shi, Aichi-ken, 471-8571 (JP)
(72) Inventor: FRANCESCA, Gianpiero, 1140 Brussels (BE); GARATTONI, Lorenzo, 1140 Brussels (BE); BIRATTARI, Mauro, 1050 Brussels (BE); GARZÓN RAMOS, David Alfredo, 1050 Brussels (BE); KEGELEIRS, Miquel, 1050 Brussels (BE)
(74) Representative: Cabinet Beau de Loménie

(57) **Abstract**

A computer-implemented method for tracking mobile objects is comprising: (S10) moving a plurality of monitoring devices in an environment comprising mobile objects; (S20) with each monitoring device, acquiring monitoring data of the environment to identify mobile objects in the environment at one or more times characterized by timestamps; (S30) generating a description of the environment based on the monitoring data, wherein the description comprises a list of object descriptors of the identified mobile objects, each object descriptor including an identification data, a location data; and a timestamp; and (S40) updating the description of a first monitoring device when the first monitoring device is within communication range of at least a second monitoring device in the environment, the updating being made by comparing the description of the first monitoring device to the description of the at least second monitoring device.

## Description

### 1. Field of the Invention

The invention relates to object tracking. In particular, the invention relates to methods and systems for tracking mobile objects.

### 2. Description of Related Art

Mobile objects tracking using multiple sensing devices is an important field of research. Generally, methods of the prior art utilize fixed cameras providing low-resolution feeds of an environment comprising mobile objects (see [REF 1]). In order to track objects within this environment, methods typically rely on extensive feature extraction from the video feeds, which makes these methods particularly subject to occlusions, lightning conditions, poses and even changes in the object appearance such as a change of clothing of a person.

Mobile object tracking using collective perception is receiving growing attention in the context of autonomous driving (see [REF 2]). However, methods of the prior art generally focus on safety with a single monitoring agent, which limits the applicability and efficiency of the approach.

Alternatively, collective perception using a robot swarm has been considered. In particular, Swarm-SLAM, a swarm-based simultaneous localization and mapping method, provides an ensemble of robots with the capability of collectively mapping an environment (see [REF 3]). However, the method requires structured, planned movements with high fidelity odometry data, which is not easily compatible with robot swarms. Further, the method can only generate pose graphs but cannot generate maps such as occupancy grids or topological maps, which limits the information that can be acquired by the swarm.

There is thus a need for methods solving problems of the prior art.

The following references disclose various methods relating to mobile object tracking.
[REF 1] AMOSA, Temitope Ibrahim, SEBASTIAN, Patrick, IZHAR, Lila Iznita, et al. Multi-camera multi-object tracking: a review of current trends and future advances. Neurocomputing, 2023, vol. 552, p. 126558.
[REF 2] ISLAM, Shirazul, IQBAL, Atif, MARZBAND, Mousa, et al. State-of-the-art vehicle-to-everything mode of operation of electric vehicles and its future perspectives. Renewable and Sustainable Energy Reviews, 2022, vol. 166, p. 112574.
[REF 3] LAJOIE, Pierre-Yves et BELTRAME, Giovanni. Swarm-slam: Sparse decentralized collaborative simultaneous localization and mapping framework for multi-robot systems. IEEE Robotics and Automation Letters, 2023, vol. 9, no 1, p. 475-482.
[REF 4] FRANCESCA, Gianpiero, BRAMBILLA, Manuele, BRUTSCHY, Arne, et al. AutoMoDe: A novel approach to the automatic design of control software for robot swarms. Swarm Intelligence, 2014, vol. 8, p. 89-112.
[REF 5] SCHROFF, Florian, KALENICHENKO, Dmitry, et PHILBIN, James. Facenet: A unified embedding for face recognition and clustering. In: Proceedings of the IEEE conference on computer vision and pattern recognition. 2015. p. 815-823.
[REF 6] ESLER, Tim. Face recognition using pytorch. 2020. https://github.com/timesler/facenet-pytorch
[REF 7] https://github.com/RobotnikAutomation/summit_xl_common.git

### SUMMARY OF THE INVENTION

According to aspects of the present disclosure, a method for mobile object tracking is provided. The method comprises steps of:
- moving a plurality of monitoring devices in an environment comprising an ensemble of mobile objects;
- with each monitoring device, acquiring monitoring data in the environment to identify mobile objects in the environment at one or more times characterized by timestamps;
- with each monitoring device, generating a description of the environment based on the monitoring data, wherein the description comprises a list of object descriptors of the identified mobile objects, each object descriptor including an identification data of a mobile object, a location data of the mobile object representative of a location at which the mobile is detected by the monitoring device; and a timestamp representative of the time at which the mobile object is detected by the monitoring device; and
- updating the description of a first monitoring device when the first monitoring device is within communication range of at least a second monitoring device in the environment, the updating comprising a comparison of the description of the environment of the first monitoring device to the description of the environment of the at least second monitoring device.

In the present description, the monitoring devices may be any mobile sensing device such as robots. The ensemble of monitoring devices that are monitoring the environment may therefore be referred to as a robot swarm.

In the present description, the mobile object that is being tracked may be any sort of physical entity, for example a person, an animal, a robot, or a car.

In the present description, the environment is a geographical area in which the robots are moving to detect mobile objects. The environment may exhibit various types of structures; in particular it can comprise a plurality of walls defining one or more rooms separated by corridors.

In the present description, collective perception of an event by an ensemble of monitoring device is the fact of detecting an event with any single monitoring device of the ensemble and propagating the information to other monitoring device so that the knowledge is acquired by the ensemble as a whole. This is in stark contrast with methods of the prior art in the field of autonomous driving (see [REF 2]) wherein the goal is to achieve safety of a single monitoring device by detection of an event detection by such device.

With the present method, an ensemble of monitoring devices such as robots (robot swarm) can maintain a presence in an environment to provide a dynamic representation of objects comprised in the environment thereby achieving collective perception of the objects within the environment. In particular, the dynamic representation is robust to various changes such as objects changing rooms within the environment.

Further, the robots forming the robot swarm can be mobile and can exhibit a small form factor which allows them to reach different positions within the environment and observe scenes at a short distance and/or from multiple perspectives. Therefore, efficient and robust identification system, such as face recognition algorithms, may be used with a good accuracy.

Advantageously, each monitoring device of the ensemble can also track the position of other monitoring devices of the ensemble.

According to embodiments, the step of updating the description of a first monitoring device comprises:
- when an object descriptor of the first monitoring device and an object descriptor of the at least second monitoring device have the same identification data but have different timestamps, and when the timestamp of the object descriptor of the first monitoring device is posterior to a timestamp of the object descriptor of the at least second monitoring device, replacing the object descriptor of the first monitoring device by the object descriptor of the at least second monitoring device.

According to embodiments, when the timestamp of the object descriptor of the first monitoring device is anterior to the timestamp of the object descriptor of the at least second monitoring device, appending the object descriptor of the second monitoring device to the description of the environment of the first monitoring device.

According to embodiments, when the first monitoring device is within communication range of a plurality of other monitoring devices, comparing sequentially the description of the environment of the first monitoring device to the descriptions of the environment of the plurality of other monitoring devices.

According to embodiments, the communication range of each monitoring device is inferior or equal to a mean width of corridors between rooms in the environment.

According to embodiments, the step of updating the description of a first monitoring device comprises updating the description of the second monitoring device simultaneously to the updating of the description of the first monitoring device using a similar comparison as for updating the first monitoring device. In particular, the description of the second monitoring device is updated similarly to the first monitoring device by comparing the timestamps of object descriptors with the same identification data.

According to embodiments, the description of the environment is processed to generate a map of the environment, the map of the environment being updated each time that the description of the environment is updated.

With this configuration, the monitoring devices provide information indicating in which room of the environment the mobile objects have been detected. Therefore, the map can be considered as a topological map of the environment with information on the location of the mobile objects.

According to embodiments, the method further comprises identifying the position of a mobile object based on the monitoring data by approximating the location of the object as being equal to the location of the robot when the mobile object is identified.

According to embodiments, the monitoring data comprises distance sensor data and/or odometry data, the method further comprises identifying the position of a mobile object from the distance sensor data and/or the odometry data.

According to embodiments, the method further comprises:
- acquiring monitoring data relative to a parameter of the environment at one or more times characterized by timestamps; wherein the description of the environment further comprises a list of parameter descriptors including a parameter identification data, a parameter value, a location at which the parameter data is acquired by the monitoring device, and a parameter timestamp representative of the time at which the monitoring data is acquired by the monitoring device;
- updating the parameter descriptors of the first monitoring device, based on a comparison with a parameter descriptor of the at least second monitoring device similarly to the updating of the object descriptors.

With the present method, the description generated by the monitoring devices may also comprise parameter descriptors related to parameters of the environment such as, for example, temperature, acoustic reverberation data, light gradient data. Therefore, the present method may be used to keep track of various parameters of the environment while keeping track of the mobile objects. Further, the present method may be used to keep track of such parameters relatively to sub-elements of the environment (for example relative to a specific room in the environment).

According to embodiments, the identification data of the objects are obtained by comparing the monitoring data to a reference database of objects known to be in the environment and/or by processing the monitoring data with a machine learning-based pattern recognition model in order to associate a mobile object with a unique identification data.

According to embodiments, the monitoring data comprise one of more among: images of the environment acquired by a camera; acoustic reverberation data acquired with an acoustic sensor; temperature data of the environment acquired by a temperature sensor; and light gradient data acquired by a light sensor.

The present disclosure is further related to a mobile object tracking system comprising a plurality of monitoring devices configured to generate a description of an environment comprising mobile objects using the above method.

The present disclosure is further related to a computer program including instructions for executing the steps of the above method when said program is executed by a computer. This program can use any programming language and take the form of source code, object code or a code intermediate between source code and object code, such as a partially compiled form, or any other desirable form.

The present disclosure is further related to a recording medium readable by a computer and having recorded thereon a computer program including instructions for executing the steps of the above method. The recording medium can be any entity or device capable of storing the program. For example, For example, the medium can include a mass memory device, such as hard drive. In general, mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks.

Alternatively, the recording medium can be an integrated circuit in which the program is incorporated, the circuit being adapted to execute the method in question or to be used in its execution.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram representing aspects of a method for mobile object tracking according embodiments of the present disclosure;
FIG. 2 is a schematic view of a system for mobile object tracking according to embodiments of the present disclosure;
FIG. 3 is a graph of cumulative distribution of event detection time for various sizes of robot swarms according to embodiments of the present disclosure;
FIGS. 4A-4C are graphs of cumulative distribution of information propagation time to different proportion of the robot swarms, according to embodiments of the present disclosure.

### DETAILED DESCRIPTION OF EMBODIMENTS

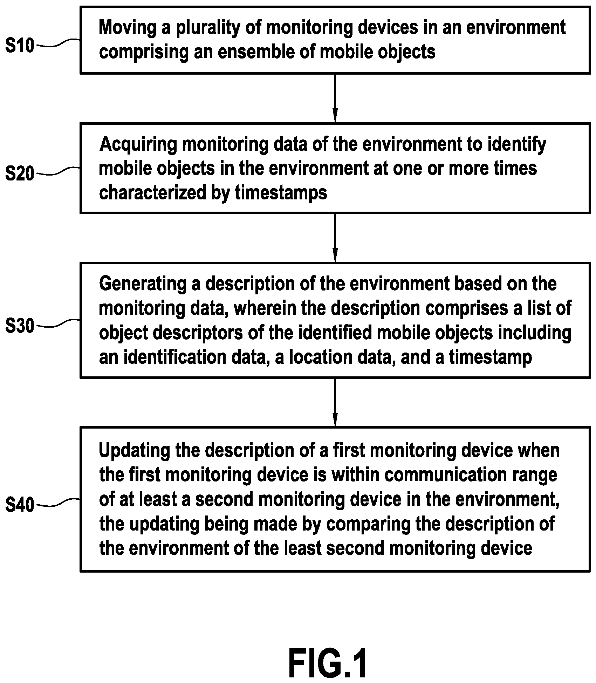

Methods and systems for tracking mobile objects, which constitute exemplary embodiments of the present disclosure, are now going to be presented in relation with FIGS. 1-4.

FIG. 1 illustrates embodiments of a mobile tracking method according to the present disclosure. Embodiments of the method comprise the following steps: (S10) moving a plurality of monitoring devices in an environment comprising an ensemble of mobile objects; (S20) with each monitoring device, acquiring monitoring data of the environment to identify mobile objects in the environment at one or more times characterized by timestamps; (S30) with each monitoring device, generating a description of the environment based on the monitoring data, wherein the description comprises a list of object descriptors of the identified mobile objects, each object descriptor including an identification data of a mobile object, a location data of the mobile object representative of a location at which the mobile is detected by the monitoring device; and a timestamp representative of the time at which the mobile object is detected by the monitoring device; (S40) updating the description of a first monitoring device when the first monitoring device is within communication range of at least a second monitoring device in the environment, the updating being made by comparing the description of the environment of the first monitoring device to the description of the environment of the at least second monitoring device. The present disclosure also relates to mobile object tracking systems implementing such methods.

The present mobile object methods and systems may be used for mapping unknown, or partially known environments and for tracking mobiles objects within such environment in space and in time. Accordingly, the steps S10, S20, S30, S40 of the method may be repeated a certain number of times so that the robots of the robots swarms exchange sufficient information to map the entire environment and the mobile objects within the environment. The mapping of the environment may comprise the generation of a map of the environment indicating in which room of the environment the mobile objects are located.

The mobile objects may comprise, in particular, the monitoring devices themselves whose location at any time may be important information.

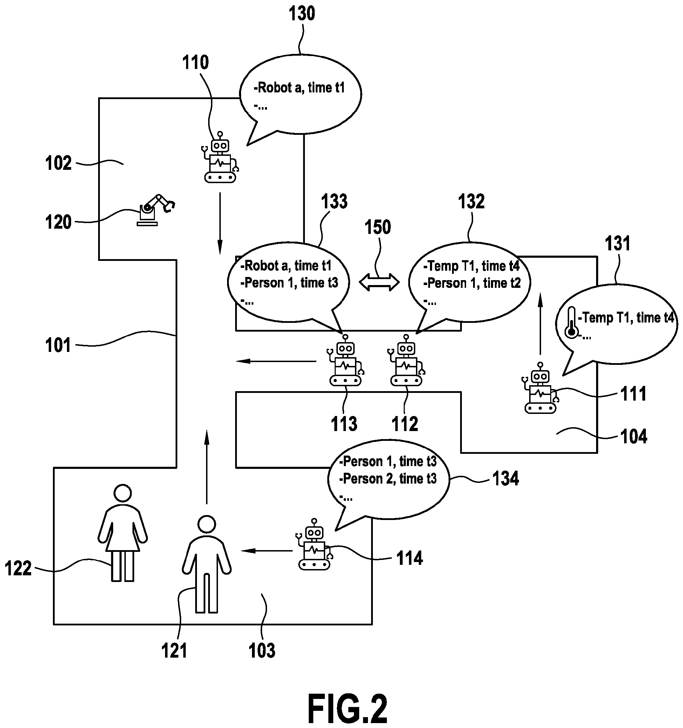

FIG. 2 illustrates a schematic view of an environment 101 within which various types of mobile objects are moving or resting. In the illustrated embodiments, the mobile objects may comprise, for example, monitoring devices such as robots 110, 111, 112, 113, 114 forming a robot swarm. Further, the mobile objects may comprise persons 121, 122 and utility robots 120 other than the monitoring devices. As indicated by the presence of arrows near the mobile objects in FIG. 2, the mobile objects may be moving in different directions. Further, the mobile objects may also be resting. As time goes by, the mobile objects may generally change states between resting and moving. Further, they can change the direction in which they are moving and/or the speed at which they are moving.

The environment can exhibit various structures. In the example illustrated in FIG. 2, the environment 101 comprises three rooms 102, 103, 104 of different geometry and different sizes. The three rooms are organized in a star configuration wherein all the rooms meet in a central point through corridors of various lengths and various widths.

For the sake of illustration, the structure represented in FIG. 2 is simple. However, in the present disclosure, the environment may also exhibit various other types of structures with different configurations. For example, ring-like configurations, bus-like configurations, or line-like configurations. Further, the environment may comprise complex walls with various irregularities and indentations. Any of these configurations does not prevent the present method from successfully achieve collective perception of the mobile objects within the environment.

With reference to FIG. 2, as the monitoring devices (robots) 110, 111, 112, 113, 114 travel through the environment while implementing the present method, they acquire monitoring data of the environment and form descriptions of the environment, which are indicated by the speech bubbles 130, 131, 132, 133, 134. Note that, for the sake of illustration, the location data of the description are not represented in FIG. 2 but that they are a part of the description generated by the monitoring devices. The location data may be assimilated to the location of the robot when the object was detected (assuming that the object was very close to the robot). Alternatively, the location data may be obtained by distance sensors such as odometry sensors or LIDARS.

For each object identified, a robot keeps data consisting of their unique identification data (ID), the location where it has detected them, and the timestamp of the detection. If the same object is repeatedly detected at the same location, the robot may update the corresponding timestamp only if the difference between the two timestamps is superior to a predetermined duration threshold. This ensures that the robot will not flood the results with repeated nearly identical data.

In the method according to the present disclosure, robots within communication of each other use a predetermined protocol to exchange data. First, each robot sends all its data (current description) to all other robots within range. Second, for each data (description) received, a robot checks if the ID of the object descriptor corresponds to the ID of one of the object descriptor it has detected so far. Third, if this is the case (meaning that an ID from the description received corresponds to the ID of one of the object descriptor it has detected), the robot compares the timestamps of the two object descriptors and keeps only the one with the most recent timestamp. Further, if it is not the case (meaning that an ID from the description received does not correspond to any of the ID of the object descriptors it has detected), the new object descriptor is appended to the current description of the robot (but the previous object descriptor is preserved).

With reference to FIG. 2, the robot 110 has a description 130 with an object descriptor indicating, among others, that the object identification data (ID), "Robot a", has been identified at timestamp, t1.

The robot has a description 111 with a parameter descriptor indicating that a temperature, T1, has been measured at timestamp, t4.

The robot 112 has a description 132 with a parameter descriptor indicating that a temperature, T1, has been measured at timestamp, t4; and an object descriptor indicating that the object with ID, "Person 1", has been identified at timestamp t2.

The robot 113 has a description 133 with a first object descriptor indicating that the object with ID, "Robot a", was detected at timestamp t1; and a second object descriptor indicating that the object with ID, "Person 1", has been identified at timestamp, t3.

The robot 114 has a description 134 with a first object descriptor indicating that an object of ID, "Person 1", has been identified at timestamp, t3; and a second object descriptor indicating that an object of ID, "Person 2", has been identified at timestamp, t3.

As represented by the double arrow 150 when two robots 112, 113 enter within communication range of each other, they compare and update their description of the environment by comparing sequentially all the descriptors. In the case illustrated in FIG. 2, the two robots both have an object descriptor with the same object ID, "Person 1". Therefore, as the timestamp, t3, is posterior to the timestamp, t2, the robot 112 will update its own description by replacing its object descriptor (related to current timestamp (t2)) with the object descriptor of the other robot 113 (related to the new timestamp (t3)) with which communication is ongoing. Further, the other robot 113 with the object descriptor associated to the most recent timestamp (t3) appends the object descriptor with the previous timestamp (t2) to its own description. Although not illustrated, the object descriptor also comprises location data, so the updated description keeps track of the location of detected mobile objects.

Each time two monitoring devices are within communication range, they proceed with the updating of their description using the aforementioned comparison.

The communication range may depend on the type of monitoring device that is used. However, it is advantageous to keep it substantially smaller than the size of the whole environment so that the monitoring devices can communicate only when passing near each other and not when they are remotely located.

In the simulation explained hereafter the communication range is set to the width of the corridors of the environment (2.5 m). Accordingly, when the monitoring devices pass each other in a corridor they update their description through mutual communication according to the present method, however when two monitoring devices are moving in a room but are at distance superior to the communication range, they do not communicate.

The inventors have conducted experiments in simulation in order to implement the present method. The simulations have been made using the Gazebo software with a standard autonomous mobile robot model equipped with LIDAR sensors and inertial measurement unit (IMU)-based sensors, see for example the packages disclosed in [REF 7]. Each robot of the swarm is controlled by a separate robot operating system (ROS) that processes and publishes relevant data and performs ballistic motions and random obstacle avoidance. In the simulations, the environment comprises 5 rooms linked through a corridor.

The motion of the robots may be based on ballistic motion as disclosed in the prior art (see [REF 4]). In particular, the robot may be controlled through an exploration module which drives the robots in a constant straight motion, only changing direction when an obstacle is detected.

The identification of objects in the environment from the monitoring data may be implemented through various identification pipelines. For example, images acquired by the monitoring devices may be processed through a PyTorch implementation based on the FaceNet algorithm (see [REF 5] & [REF 6]).

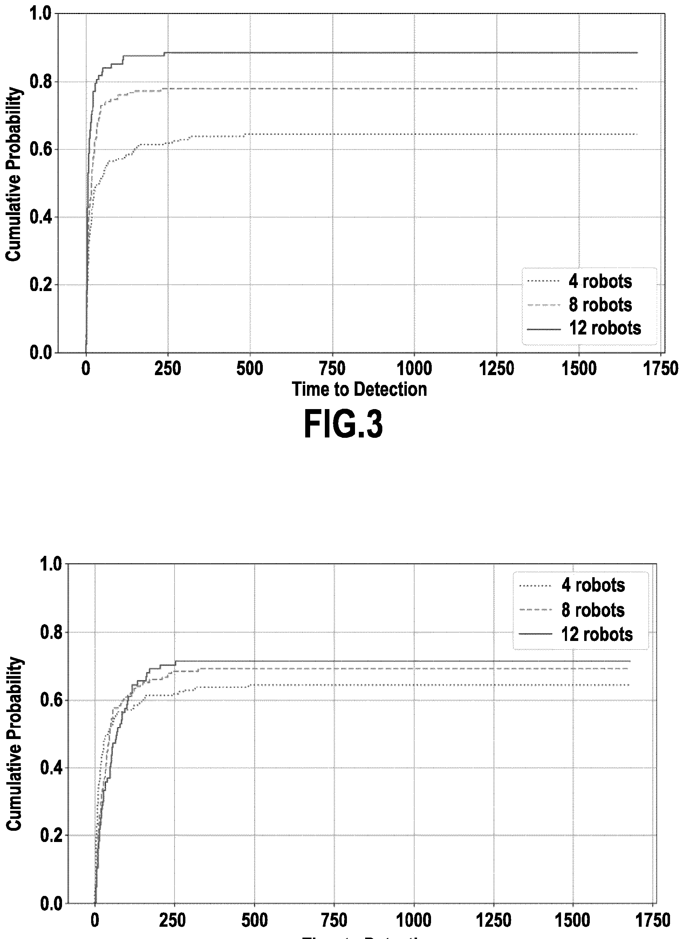

FIG. 3 shows simulation results regarding the cumulative distribution of the time required for the robot swarm to detect an event (detection time). In the simulation on which the results are based, the event consists in a person changing location but the results are representative of other events that can be detected with the robot swarm. The results (detection rate) are shown for three different sizes of robot swarm: a robot swarm with 4 robots, a robot swarm with 8 robots, and a robot swarm of 12 robots. The results confirm the ability of a robot swarm implementing the present method to monitor event in an environment. In particular, the results indicate that swarms of all three sizes are able to detect that a person has changed their location with a final probability which is higher than 65%.

Additionally, the results in FIG. 3 show that, as the swarm size increases, robots can cover larger parts of the environment and detect events more reliably. In particular, a robot swarm of 12 robots achieves a detection rate approximately equal to 90%. Also, a majority of the detection events occurred within 50 seconds after the occurrence of the event, with larger swarms achieving shorter detection time. Therefore, the results in FIG. 3 show that a robot swarm implementing the present method achieves reliable and quick detection of an event through collective perception. Such detection refers to the fact of detecting an event by at least one robot of the swarm.

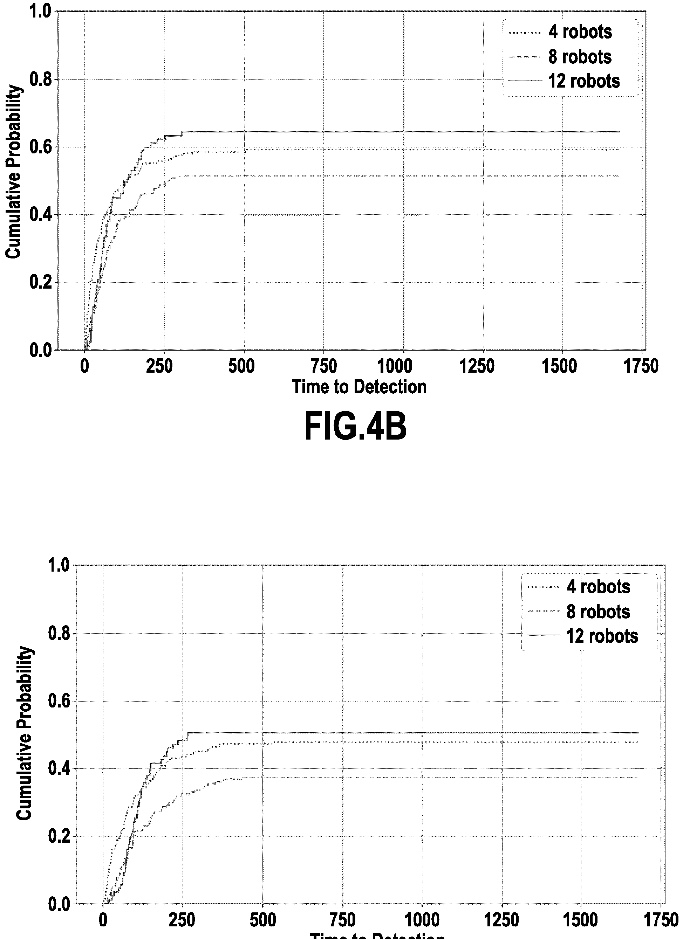

FIGS. 4A-4C show simulation results regarding the cumulative distribution of the time required to propagate information about the detection of an event (propagation time) to different proportions of the robot swarm (25% for FIG. 4A, 50% for FIG. 4B, and 75% for FIG. 4C). In particular, this means that it is the time between the moment when a first robot of the swarm detects an event (a person changing location) and the moment when the information about the detection has propagated to a predetermined proportion of the robot swarm. This means that such proportion of the robot swarm will have updated its own description of the environment with the new position of the person.

For each proportion of the robot swarm, the propagation time is represented for three different swarm sizes: 4 robots, 8 robots, and 12 robots. A propagation of 25% of the swarm is reached with a probability of 70% for both the 8-robots swarm and 12-robots swarm. This implies that most of the events detected by the swarm have sufficient time to propagate to other robots of the swarm before the occurrence of a following event. In others terms, the robot swarm can acquire collective perception of an event before a following event occurs.

Further, FIGS. 4A-4C show that the probability of reaching a higher proportion of the swarm decreases rapidly because the required propagation time increases. In average, it takes 250s for information about an event detection to propagate to 50% and 75% of the swarm, which is longer than the average time for a person to move (typically 200 ms). However the 12-robots swarm is able to propagate information to 50% (respectively 50%) of the swarm with a probability of about 70% (respectively 50%).

The combined results of FIG. 3 and FIGS. 4A-4C show that, with the present method, the swarm can maintain sufficient cohesion to allow for information propagation, while remaining sparse enough to cover the environment. This is particularly advantageous when the size of the swarm is high enough to cover the environment. In the simulated environment, a robot swarm with 12 robots is satisfying. The present method may be generalized to any environments, in which case, particularly advantageous number of robots may be easily found through simulation.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A computer-implemented method for mobile object tracking comprising:
- (S10) moving a plurality of monitoring devices in an environment comprising an ensemble of mobile objects;
- (S20) with each monitoring device, acquiring monitoring data of the environment to identify mobile objects in the environment at one or more times **characterized by** timestamps;
- (S30) with each monitoring device, generating a description of the environment based on the monitoring data, wherein the description comprises a list of object descriptors of the identified mobile objects, each object descriptor including an identification data of a mobile object, a location data of the mobile object representative of a location at which the mobile is detected by the monitoring device; and a timestamp representative of the time at which the mobile object is detected by the monitoring device; and
- (S40) updating the description of a first monitoring device when the first monitoring device is within communication range of at least a second monitoring device in the environment, the updating comprising a comparison of the description of the environment of the first monitoring device to the description of the environment of the at least second monitoring device.

2. The method of claim 1, wherein the step of (S40) updating the description of a first monitoring device comprises:
- when an object descriptor of the first monitoring device and an object descriptor of the at least second monitoring device have the same identification data but have different timestamps, and when the timestamp of the object descriptor of the first monitoring device is posterior to the timestamp of the object descriptor of the at least second monitoring device; replacing the object descriptor of the first monitoring device by the object descriptor of the at least second monitoring device.

3. The method of claim 2, further comprising:
- when the timestamp of the object descriptor of the first monitoring device is anterior to the timestamp of the object descriptor of the at least second monitoring device, appending the object descriptor of the second monitoring device to the description of the environment of the first monitoring device.

4. The method of any of claims 1 to 3, wherein, the step of (S40) updating the description of a first monitoring device comprises:
- when the first monitoring device is within communication range of a plurality of other monitoring devices, comparing sequentially the description of the environment of the first monitoring device to the descriptions of the environment of the plurality of other monitoring devices.

5. The method of claim 4, wherein the communication range of each monitoring device is inferior or equal to a mean width of corridors between rooms in the environment.

6. The method of any of claims 1 to 5, wherein the step of (S40) updating the description of a first monitoring device comprises:
- updating the description of the second monitoring device simultaneously to the updating of the description of the first monitoring device using a similar comparison as for updating the first monitoring device.

7. The method of any of claims 1 to 6, wherein the description of the environment is processed to generate a map of the environment indicating the location of identified objects within the environment, the map of the environment being updated each time that the description of the environment is updated.

8. The method of any of claims 1 to 7, further comprising:
- identifying the position of a mobile object based on the monitoring data by approximating the location of the object as being equal to the location of the robot when the mobile object is identified.

9. The method of any of claims 1 to 7, wherein the monitoring data comprises distance sensor data and/or odometry data, the method further comprises:
- identifying the position of a mobile object from the distance sensor data and/or the odometry data.

10. The method of any of claims 1 to 9, further comprising:
- acquiring monitoring data relative to a parameter of the environment at one or more times **characterized by** timestamps; wherein the description of the environment further comprises a list of parameter descriptors including a parameter identification data, a parameter value, a location at which the parameter data is acquired by the monitoring device, and a parameter timestamp representative of the time at which the monitoring data is acquired by the monitoring device;
- updating the parameter descriptors of the first monitoring device, based on a comparison with a parameter descriptor of the at least second monitoring device similarly to the updating of the object descriptors.

11. The method of any of claims 1 to 10, wherein the identification data of the objects are obtained by comparing the monitoring data to a reference database of objects known to be in the environment and/or by processing the monitoring data with a machine learning-based pattern recognition model in order to associate a mobile object with a unique identification data.

12. The method of any of claims 1 to 11, wherein the monitoring data comprise one of more among: images of the environment acquired by a camera; acoustic reverberation data acquired with an acoustic sensor; temperature data of the environment acquired by a temperature sensor; light gradient data acquired by a light sensor.

13. A mobile object tracking system comprising a plurality of monitoring devices configured to generate a description of an environment comprising mobile objects using the method according to any of claims 1 to 12.

14. A computer program including instructions for executing the steps of the method according to any of claims 1 to 12 when said program is executed by a computer.

15. A recording medium readable by a computer and having recorded thereon a computer program including instructions for executing the steps of the method according to any of claims 1 to 12.

## Amended claims

### Amended claims in accordance with Rule 137(2) EPC.

1. A computer-implemented method for mobile object tracking comprising:
- (S10) moving a plurality of monitoring devices in an environment comprising an ensemble of mobile objects;
- (S20) with each monitoring device, acquiring monitoring data of the environment to identify mobile objects in the environment at one or more times **characterized by** timestamps;
- (S30) with each monitoring device, generating a description of the environment based on the monitoring data, wherein the description comprises a list of object descriptors of the identified mobile objects, each object descriptor including an identification data of a mobile object, a location data of the mobile object representative of a location at which the mobile object is detected by the monitoring device; and a timestamp representative of the time at which the mobile object is detected by the monitoring device; and
- (S40) updating the description of a first monitoring device when the first monitoring device is within communication range of at least a second monitoring device in the environment, the updating comprising a comparison of the description of the environment of the first monitoring device to the description of the environment of the at least second monitoring device, wherein if the same object is repeatedly detected at a same location, the corresponding timestamps of the monitoring devices are updated only if the difference between the two timestamps is superior to a predetermined duration threshold.

2. The method of claim 1, wherein the step of (S40) updating the description of a first monitoring device comprises:
- when an object descriptor of the first monitoring device and an object descriptor of the at least second monitoring device have the same identification data but have different timestamps, and when the timestamp of the object descriptor of the first monitoring device is posterior to the timestamp of the object descriptor of the at least second monitoring device; replacing the object descriptor of the first monitoring device by the object descriptor of the at least second monitoring device.

3. The method of claim 2, further comprising:
- when the timestamp of the object descriptor of the first monitoring device is anterior to the timestamp of the object descriptor of the at least second monitoring device, appending the object descriptor of the second monitoring device to the description of the environment of the first monitoring device.

4. The method of any of claims 1 to 3, wherein, the step of (S40) updating the description of a first monitoring device comprises:
- when the first monitoring device is within communication range of a plurality of other monitoring devices, comparing sequentially the description of the environment of the first monitoring device to the descriptions of the environment of the plurality of other monitoring devices.

5. The method of claim 4, wherein the communication range of each monitoring device is inferior or equal to a mean width of corridors between rooms in the environment.

6. The method of any of claims 1 to 5, wherein the step of (S40) updating the description of a first monitoring device comprises:
- updating the description of the second monitoring device simultaneously to the updating of the description of the first monitoring device using a similar comparison as for updating the first monitoring device.

7. The method of any of claims 1 to 6, wherein the description of the environment is processed to generate a map of the environment indicating the location of identified objects within the environment, the map of the environment being updated each time that the description of the environment is updated.

8. The method of any of claims 1 to 7, further comprising:
- identifying the position of a mobile object based on the monitoring data by approximating the location of the object as being equal to the location of the monitoring device when the mobile object is identified.

9. The method of any of claims 1 to 7, wherein the monitoring data comprises distance sensor data and/or odometry data, the method further comprises:
- identifying the position of a mobile object from the distance sensor data and/or the odometry data.

10. The method of any of claims 1 to 9, further comprising:
- acquiring monitoring data relative to a parameter of the environment at one or more times **characterized by** timestamps; wherein the description of the environment further comprises a list of parameter descriptors including a parameter identification data, a parameter value, a location at which the parameter data is acquired by the monitoring device, and a parameter timestamp representative of the time at which the monitoring data is acquired by the monitoring device, wherein the parameter of the environment comprises one among: temperature, acoustic reverberation data, light gradient data; and
- updating the parameter descriptors of the first monitoring device, based on a comparison with a parameter descriptor of the at least second monitoring device similarly to the updating of the object descriptors.

11. The method of any of claims 1 to 10, wherein the identification data of the objects are obtained by comparing the monitoring data to a reference database of objects known to be in the environment and/or by processing the monitoring data with a machine learning-based pattern recognition model in order to associate a mobile object with a unique identification data.

12. The method of any of claims 1 to 11, wherein the monitoring data comprise one of more among: images of the environment acquired by a camera; acoustic reverberation data acquired with an acoustic sensor; temperature data of the environment acquired by a temperature sensor; light gradient data acquired by a light sensor.

13. A mobile object tracking system comprising a plurality of monitoring devices configured to generate a description of an environment comprising mobile objects using the method according to any of claims 1 to 12.

14. A computer program including instructions for executing the steps of the method according to any of claims 1 to 12 when said program is executed by a computer.

15. A recording medium readable by a computer and having recorded thereon a computer program including instructions for executing the steps of the method according to any of claims 1 to 12.
